# EUROPÄISCHE PATENTSCHRIFT

(11) **EP 1 223 062 B1**
(45) Veröffentlichungstag und Bekanntmachung des Hinweises auf die Patenterteilung: **10.12.2003**
(21) Anmeldenummer: 02000657.3
(22) Anmeldetag: 10.01.2002
(51) Int. Cl.: B60H 1/34

(54) **Verschwenkbarer Ausströmer für Fahrzeugbelüftung**
Pivotable ventilation nozzle for vehicle
Buse d'aération pivotante pour véhicule

(30) Priorität: 15.01.2001 DE 20100649 U
(43) Veröffentlichungstag der Anmeldung: 17.07.2002
(73) Patentinhaber: Volkswagen Aktiengesellschaft, 38436 Wolfsburg (DE)
(72) Erfinder: Krause, Reinhard, 95615 Markredwitz-Brand (DE)

(56) Entgegenhaltungen:
- DE-A- 1 655 956
- DE-A- 19 615 223
- DE-C- 19 748 998

## Beschreibung

Die Erfindung betrifft einen Ausströmer für die Fahrzeugbelüftung.

Solche Ausströmer sind in den verschiedensten Ausgestaltungen bekannt, z.B. aus DE-A-1 655 956. Sie dienen allgemein dazu, sowohl das Volumen als auch die Richtung eines Luftstroms, der einem Fahrzeuginnenraum zur Klimatisierung zugeführt wird, in der gewünschten Weise einzustellen. Übliche Bestandteile sind zum einen eine Absperrklappe, mittels der das Volumen eingestellt werden kann, sowie mehrere Lamellen, mittels denen die Richtung des Luftstroms bestimmt werden kann.

In jüngster Zeit gibt es verschiedene Ansätze, z.B. in DE-A-196 15223, diese Ausströmer in einer optisch ansprechenden Weise zu gestalten, insbesondere für den Zustand, daß sie nicht zur Luftverteilung benötigt werden.

Die Aufgabe der Erfindung besteht somit darin, einen Ausströmer zu schaffen, bei dem die Lamellen nicht sichtbar sind, wenn der Ausströmer nicht benötigt wird.

Zu diesem Zweck sieht die Erfindung einen Ausströmer für die Fahrzeugbelüftung vor, mit einem Gehäuse, das mit einer Öffnung versehen ist, einer Absperrklappe und einem Lamellenträger, der mit einer Ausströmöffnung, einer Verkleidungsfläche und einem Bedienelement versehen ist, das seitlich der Ausströmöffnung angebracht ist, wobei der Lamellenträger in dem Gehäuse so angebracht ist, daß er zwischen einer geöffneten Stellung, in der die Ausströmöffnung und das Bedienelement in der Öffnung des Gehäuses liegen, und einer geschlossenen Stellung schwenkbar ist, in der die Verkleidungsfläche in der Öffnung des Gehäuses liegt. Der erfindungsgemäße Ausströmer kann also in einen Zustand gebracht werden, in welchem nur die am Lamellenträger angebrachte Verkleidungsfläche sichtbar ist. Wenn diese in gleicher Weise ausgeführt ist wie das den Ausströmer umgebende Armaturenbrett, ergibt sich ein ansprechendes optisches Erscheinungsbild, wobei nur der Spalt zwischen der Verkleidungsfläche des Ausströmers und dem umgebenden Armaturenbrett sichtbar ist.

Gemäß einer bevorzugten Ausführungsform der Erfindung ist vorgesehen, daß die Absperrklappe schwenkbar am Gehäuse angebracht ist, das Bedienelement mit der Absperrklappe zusammenwirkt und zwischen dem Bedienelement und der Absperrklappe eine lösbare Kupplung vorgesehen ist, mittels der die Verbindung zwischen dem Bedienelement und der Absperrklappe gelöst werden kann, wenn der Lamellenträger in die geschlossene Stellung gebracht wird. Durch das Lösen der Verbindung zwischen Bedienelement und Absperrklappe kann auf einen aufwendigen Kupplungsmechanismus zwischen Bedienelement und Absperrklappe verzichtet werden, der nicht nur die Betätigung der Absperrklappe ermöglichen müßte, sondern auch das Verschwenken des Lamellenträgers in die geschlossene Stellung erlauben müßte.

Gemäß der bevorzugten Ausführungsform der Erfindung ist die Kupplung durch einen Verstellhebel gebildet, der mit der Absperrklappe verbunden ist und einen an einer Seite offenen Schlitz aufweist, und durch einen Stift, der an dem Bedienelement angebracht ist und in den Schlitz eingreifen kann. Die Lösbarkeit dieser Kupplung ist dadurch gegeben, daß der Stift aus dem Schlitz austreten kann, wenn der Lamellenträger in die geschlossene Stellung verschwenkt wird. Wenn anschließend der Lamellenträger wieder in die geöffnete Stellung gebracht wird, wird der Stift automatisch wieder in den Schlitz eingeführt und die Verbindung vom Bedienelement zur Absperrklappe ist wieder hergestellt.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer perspektivischen Ansicht einen Ausströmer mit Lamellenträger in einer geöffneten Stellung;
- Figur 2 in einer perspektivischen, abgeschnittenen Ansicht den Ausströmer von Figur 1 in einer Zwischenstellung;
- Figur 3 in einer perspektivischen Ansicht den Ausströmer von Figur 1 mit dem Lamellenträger in der geschlossenen Stellung;
- Figur 4 einen Schnitt durch den Ausströmer von Figur 1;
- Figur 5 einen Schnitt durch den Ausströmer von Figur 2;
- Figur 6 einen Schnitt durch den Ausströmer von Figur 3;
- Figur 7 einen Schnitt entsprechend demjenigen von Figur 4, wobei sich das Bedienelement in einer anderen Stellung befindet; und
- Figur 8 einen Schnitt entsprechend demjenigen von Figur 6, wobei sich das Bedienelement in einer anderen Stellung befindet.

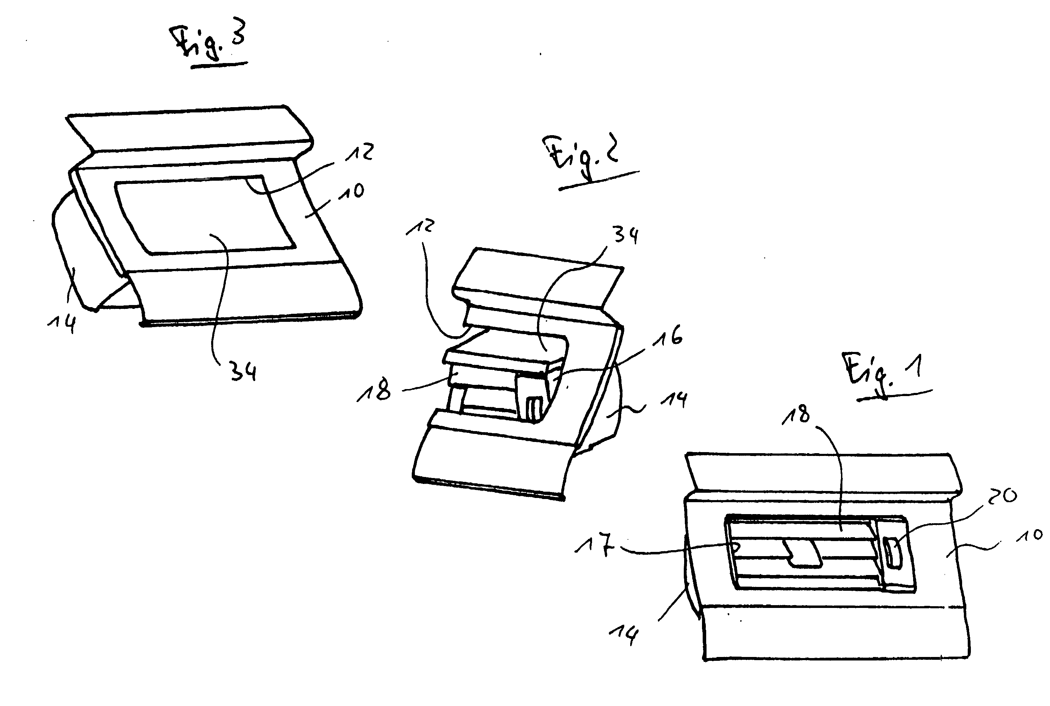

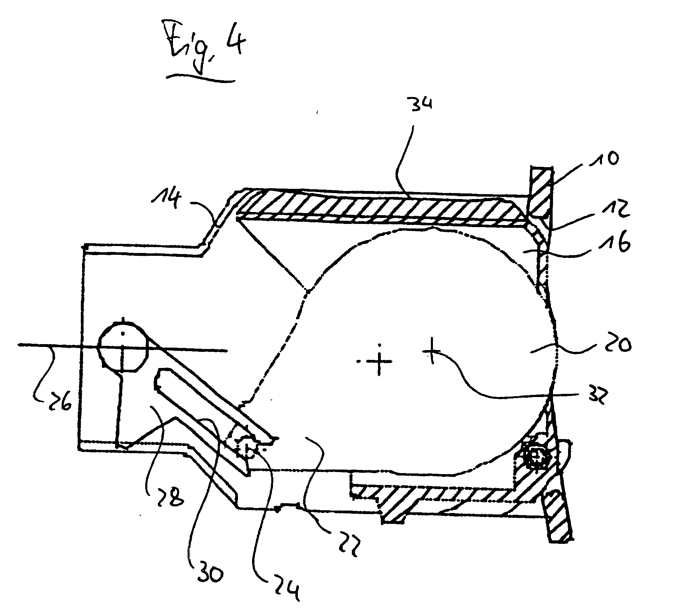

In Figur 1 ist ein Armaturenbrett 10 gezeigt, in welchem ein Ausströmer für die Fahrzeugbelüftung vorgesehen ist. Im Armaturenbrett ist eine Öffnung 12 (siehe Figur 2) vorgesehen, die zu einem Gehäuse 14 gehört. Im Gehäuse 14 ist schwenkbar ein Lamellenträger 16 gelagert, der mit einer Ausströmöffnung versehen ist und an welchem schwenkbare Lamellen 18 angebracht sind. Die Lamellen 18 können in an sich bekannter Weise manuell verstellt werden, so daß die Strömungsrichtung eines durch den ausströmenden Luftstrahls in der gewünschten Weise eingestellt werden kann.

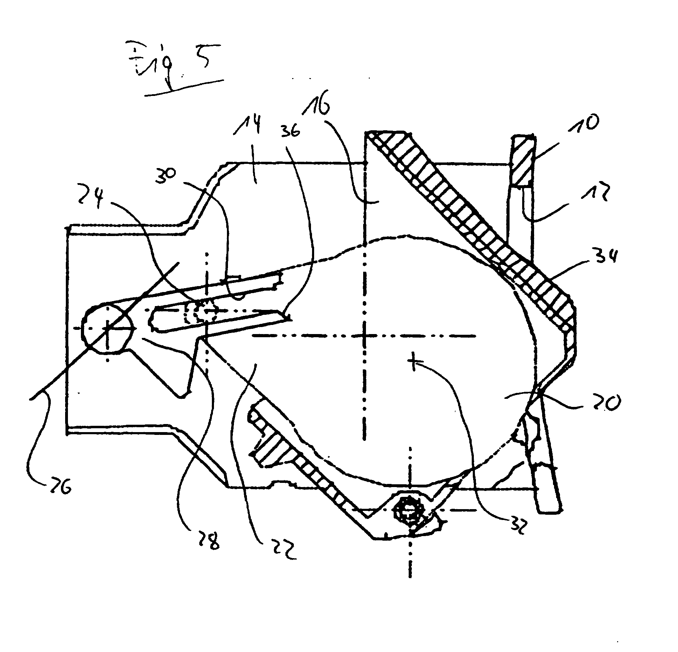

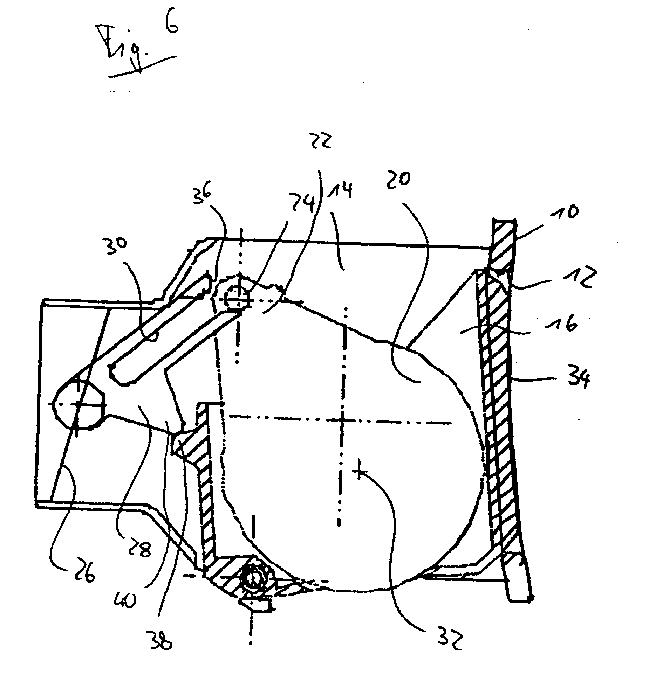

Seitlich neben den Lamellen 18 ist am Lamellenträger 16 ein Bedienelement 20 angebracht, daß hier als Handrad ausgeführt ist. Das Handrad ist auf seiner vom Armaturenbrett 10 abgewandten und somit nicht sichtbaren Seite mit einem Fortsatz 22 versehen, an welchem ein Stift 24 angebracht ist (siehe Figur 4).

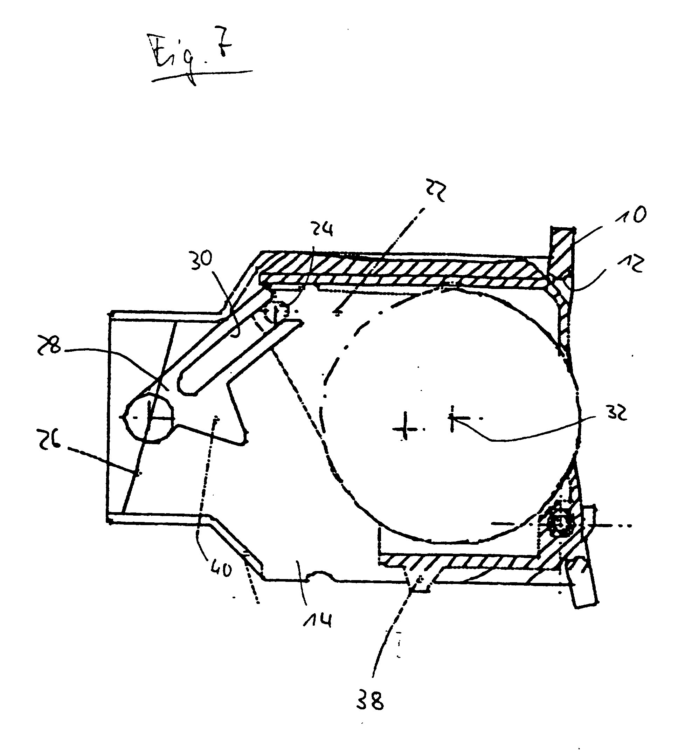

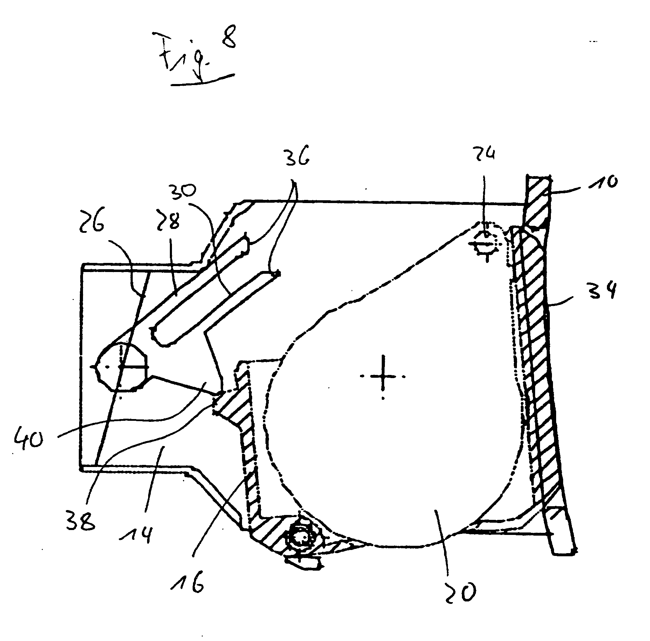

Wie in Figur 4 zu sehen ist, ist am Gehäuse 14 eine Absperrklappe 26 schwenkbar so angebracht, daß sie zwischen einer geöffneten, in Figur 4 gezeigten Stellung sowie einer geschlossenen Stellung verschwenkbar ist, die in Figur 6 gezeigt ist. In der geschlossenen Stellung ist der Lufteinlaß zum Gehäuse 14 verschlossen. Fest mit der Absperrklappe 26 ist ein Verstellhebel 28 verbunden, der mit einem Schlitz 30 versehen ist. Der Schlitz ist so ausgebildet, daß er mit dem Stift 24 am Bedienelement 20 zusammenwirken kann. Dies ermöglicht durch Drehen des Bedienelementes 20 um dessen Drehachse 32, die Absperrklappe 26 aus ihrer in Figur 4 gezeigten, geöffneten Stellung in eine geschlessene Stellung zu bringen. Zu diesem Zweck wird bezüglich der Darstellung von Figur 4 das Bedienelement im Uhrzeigersinn gedreht, so daß der Stift 24 sich nach oben bewegt und dadurch die Absperrklappe 26 in die geschlossene Stellung bringt.

Wie in den Figuren 2 und 3 zu sehen ist, kann der gesamte Lamellenträger 16 mit den Lamellen 18 und dem Bedienelement 20 aus der in Figur 1 gezeigten geöffneten Stellung, in der die Lamellen 18 und das Bedienelement 20 im Bereich der Öffnung 12 des Gehäuses 14 liegen, über eine in Figur 2 gezeigte Zwischenstellung in die in Figur 3 gezeigte geschlossene Stellung gebracht werden. In dieser Stellung ist eine Verkleidungsfläche 34, die am Lamellenträger 16 ausgebildet ist, so verschwenkt, daß die Öffnung 12 durch sie verschlossen ist. Es sind in der geschlossenen Stellung des Lamellenträgers weder die Lamellen 18 noch das Bedienelement 20 sichtbar, so daß, wenn die Verkleidungsfläche 34 optisch an das Armaturenbrett 10 angepaßt ist, sich ein harmonischer, ununterbrochener Gesamteindruck ergibt.

Der Lamellenträger kann auf jede beliebige Art und Weise zwischen der geöffneten und der geschlossenen Stellung verschwenkt werden, beispielsweise von Hand, durch einen Federmechanismus oder auch durch einen Motorantrieb.

In den Figuren 5 und 6 ist die Bewegung des Lamellenträgers 16 sowie der Absperrklappe 26 beim Übergang von der geöffneten Stellung des Lamellenträgers in die geschlossene Stellung zu sehen. Wenn der Lamellenträger aus der geöffneten Stellung in die geschlossene Stellung verschwenkt wird, bleibt die Stellung des Bedienelementes 20 relativ zum Lamellenträger konstant. Im gezeigten Ausführungsbeispiel verbleibt also das Bedienelement 20 in der Stellung, die der vollständig geöffneten Absperrklappe 26 bei geöffnetem Lamellenträger entspricht. Durch das Verschwenken des Lamellenträgers 16 und des daran angebrachten Bedienelementes 20 wird die Absperrklappe 26 automatisch in die in Figur 6 gezeigte, geschlossene Stellung gebracht, in der sie in den Lufteintritt zum Gehäuse 14 verschließt. Dies ist besonders vorteilhaft, da dann keine besonderen Anforderungen an die Dichtigkeit zwischen der Verkleidungsfläche 34 und dem Armaturenbrett 10 gestellt werden müssen. Wenn sich der Lamellenträger 16 in seiner in Figur 6 gezeigten, geschlossenen Stellung befindet, hat der Stift 24 am Fortsatz 22 des Bedienelementes 20 den Schlitz 30 des Verstellhebels 28 verlassen. Dies ist problemlos möglich, da sowohl das Bedienelement 20 als auch die Absperrklappe 26 in ihrer jeweiligen Stellung verbleiben. Zu diesem Zweck kann eine Reibungsbremse für das Bedienelement 20 vorgesehen sein, die verhindert, daß sich das Bedienelement 20 unbeabsichtigt relativ zum Lamellenträger 16 verstellt. Wie in Figur 6 dargestellt ist, ist am Gehäuse 16 eine Nase 38 vorgesehen, die an einer Nase 40 am Schwenkhebel 28 angreift und die Absperrklappe zuverlässig in ihrer geschlossenen Stellung hält. Alternativ könnte für die Absperrklappe 26 ein Anschlag zusammen mit beispielsweise einer Federlasche vorgesehen sein, die mit einem Vorsprung an der Absperrklappe oder auch am Verstellhebel 28 zusammenwirkt. Auf diese Weise ist die Absperrklappe auch bei auftretenden Vibrationen zuverlässig in ihrer geschlossenen Stellung gehalten.

Wenn der Lamellenträger 16 wieder aus seiner geschlossenen in seine geöffnete Stellung überführt wird, wird der Stift 24 automatisch wieder in den Schlitz 30 eingeschoben, und die Kupplung zwischen dem Bedienelement 20 und der Absperrklappe 26 wird wieder hergestellt. Vorteilhafterweise sind an der offenen Seite des Schlitzes 30 zwei Einführschrägen 36 vorgesehen.

Ein besonderer Vorteil der aus dem Verstellhebel 28 und dem Stift 24 gebildeten lösbaren Kupplung zwischen dem Bedienelement und der Absperrklappe besteht darin, daß sich unabhängig von der jeweiligen Stellung der Absperrklappe dieselbe Stellung wieder einstellt, nachdem der Lamellenträger aus seiner geöffneten in seine geschlossene Stellung und wieder zurück in seine geöffnete Stellung verschwenkt wurde. In jedem Falle wird beim Verschwenken des Lamellenträgers hin in die geschlossene Stellung zuerst die Absperrklappe in ihre geschlossene Stellung gebracht. Sobald diese Stellung erreicht ist, verläßt der Stift 24 den Schlitz 30, so daß die Kupplung zwischen dem Bedienelement und der Absperrklappe aufgehoben ist. Bei der Rückbewegung wird diese Kupplung wieder hergestellt, und die Absperrklappe wird beim weiteren Verschwenken des Lamellenträgers hin zu dessen geöffneter Stellung wieder in die Stellung gebracht, die sie vorher einnahm.

In den Figuren 7 und 8 ist dies für den Fall dargestellt, daß sich die Absperrklappe in der geschlossenen Stellung befindet, wenn sich der Lamellenträger in der geöffneten Stellung befindet. Bei dieser Ausgangsstellung befindet sich der Stift 24 bereits am offenen Ende des Schlitzes 30. Wenn nun der Lamellenträger 16 in die in Figur 8 gezeigte Stellung verschwenkt wird, in der die Öffnung 12 von der Verkleidungsfläche 34 verschlossen ist, verläßt der Stift 24 sofort den Schlitz 30 und wird zusammen mit dem Lamellenträger 16 in einer Stellung verschwenkt, in der er im Vergleich zu der in Figur 6 gezeigten Situation vergleichsweise weit vom Schlitz 30 entfernt ist. Wenn der Lamellenträger 16 wieder in seine geöffnete Stellung zurückgeschwenkt wird, wird der Stift 24 wieder in den Schlitz 30 eingeschoben, so daß die Kupplung zwischen Bedienelement 20 und Absperrklappe 26 wieder hergestellt ist.

## Patentansprüche

1. Ausströmer für die Fahrzeugbelüftung, mit einem Gehäuse (14), das mit einer Öffnung (12) versehen ist, einer Absperrklappe (26) und einem Lamellenträger (16), der mit einer Ausströmöffnung und einem Bedienelement (20) versehen ist, das seitlich der Ausströmöffnung angebracht ist, **dadurch gekennzeichnet, daß** der Lamellenträger mit einer Verkleidungsfläche (34) Versehen ist, wobei der Lamellenträger (16) in dem Gehäuse (14) so angebracht ist, daß er zwischen einer geöffneten Stellung, in der die Ausströmöffnung und das Bedienelement in der Öffnung (12) des Gehäuses liegen, und einer geschlossenen Stellung schwenkbar ist, in der die Verkleidungsfläche (34) in der Öffnung (12) des Gehäuses liegt.

2. Ausströmer nach Anspruch 1, **dadurch gekennzeichnet, daß** die Absperrklappe (26) schwenkbar an dem Gehäuse (14) angebracht ist und daß das Bedienelement (20) mit der Absperrklappe (26) zusammenwirkt.

3. Ausströmer nach Anspruch 2, **dadurch gekennzeichnet, daß** zwischen dem Bedienelement (20) und der Absperrklappe (26) eine lösbare Kupplung (24, 28, 30) vorgesehen ist, mittels der die Verbindung zwischen dem Bedienelement und der Absperrklappe gelöst werden kann, wenn der Lamellenträger (16) in die geschlossene Stellung gebracht wird.

4. Ausströmer nach Anspruch 3, **dadurch gekennzeichnet, daß** die Kupplung durch einen Verstellhebel (28) gebildet ist, der mit der Absperrklappe (26) verbunden ist und einen an einer Seite offenen Schlitz (30) aufweist, und durch einen Stift (24), der an dem Bedienelement (20) angebracht ist und in den Schlitz eingreifen kann.

5. Ausströmer nach einem der vorhergehenden Ansprüche, **dadurch gekennzeichnet, daß** ein Anschlag vorgesehen ist, der die Absperrklappe in einer geschlossenen Stellung halten kann.

6. Ausströmer nach Anspruch 5, **dadurch gekennzeichnet, daß** der Anschlag durch eine Federlasche gebildet ist, die mit einem Vorsprung an der Absperrklappe zusammenwirken kann.

7. Ausströmer nach einem der vorhergehenden Ansprüche, **dadurch gekennzeichnet, daß** eine Reibungsbremse für das Bedienelement vorgesehen ist.

8. Ausströmer nach einem der vorhergehenden Ansprüche, **dadurch gekennzeichnet, daß** mindestens eine Lamelle (18) vorgesehen ist, die schwenkbar an dem Lamellenträger (16) in der Ausströmöffnung angebracht ist.

9. Ausströmer nach einem der vorhergehenden Ansprüche, **dadurch gekennzeichnet, daß** die Absperrklappe (26) geschlosssen ist, wenn sich der Lamellenträger (16) in der geschlossenen Stellung befindet.

10. Ausströmer nach einem der vorhergehenden Ansprüche, **dadurch gekennzeichnet, daß** sich die Absperrklappe (26), nachdem der Lamellenträger (16) aus der geöffneten Stellung in die geschlossene Stellung und wieder zurück in die geöffnete Stellung gebracht wurde, in derselben Stellung befindet wie vor dem Schließen des Lamellenträgers.

## Claims

1. Outlet for vehicle ventilation, having a housing (14) which is provided with an opening (12), a shutoff flap (26) and a slat carrier (16) which is provided with an outlet opening and an operating element (20) which is fitted to the side of the outlet opening, **characterized in that** the slat carrier is provided with a covering surface (34), the slat carrier (16) being fitted in the housing (14) in such a manner that it can be pivoted between an open position, in which the outlet opening and the operating element lie in the opening (12) of the housing, and a closed position, in which the covering surface (34) lies in the opening (12) of the housing.

2. Outlet according to Claim 1, **characterized in that** the shutoff flap (26) is fitted pivotably to the housing (14) and **in that** the operating element (20) interacts with the shutoff flap (26).

3. Outlet according to Claim 2, **characterized in that** a releasable coupling (24, 28, 30) is provided between the operating element (20) and the shutoff flap (26) and can be used to release the connection between the operating element and the shutoff flap when the slat carrier (16) is brought into the closed position.

4. Outlet according to Claim 3, **characterized in that** the coupling is formed by an adjusting lever (28) which is connected to the shutoff flap (26) and has a slot (30) which is open on one side, and by a pin (24) which is fitted on the operating element (20) and can engage in the slot.

5. Outlet according to one of the preceding claims, **characterized in that** a stop is provided which can hold the shutoff flap in a closed position.

6. Outlet according to Claim 5, **characterized in that** the stop is formed by a spring clip which can interact with a projection on the shutoff flap.

7. Outlet according to one of the preceding claims, **characterized in that** a friction brake is provided for the operating element.

8. Outlet according to one of the preceding claims, **characterized in that** at least one slat (18) is provided which is fitted pivotably to the slat carrier (16) in the outlet opening.

9. Outlet according to one of the preceding claims, **characterized in that** the shutoff flap (26) is closed when the slat carrier (16) is in the closed position.

10. Outlet according to one of the preceding claims, **characterized in that** after the slat carrier (16) has been brought from the open position into the closed position and back again into the open position, the shutoff flap (26) is in the same position as before the slat carrier was closed.

## Revendications

1. Buse d'aération de véhicules, comportant un boîtier (14) qui est muni d'une ouverture (12), une trappe de fermeture (26) et un support de lamelles (16), qui est équipé d'une ouverture d'échappement et d'un élément de manoeuvre (20), qui est installé sur le côté de l'ouverture d'échappement, **caractérisée en ce que** le support de lamelles est pourvu d'une surface revêtue (34), le support de lamelles (16) étant installé dans le boîtier (14) de manière à pouvoir pivoter entre une position ouverte, dans laquelle l'ouverture d'échappement et l'élément de manoeuvre se trouvent dans l'ouverture (12) du boîtier, et une position fermée, dans laquelle la surface revêtue (34) se trouve dans l'ouverture (12) du boîtier.

2. Buse d'aération selon la revendication 1, **caractérisée en ce que** la trappe de fermeture (26) est installée de manière à pouvoir pivoter sur le boîtier (14) et que l'élément de manoeuvre (20) coopère avec la trappe de fermeture (26).

3. Buse d'aération selon la revendication 2, **caractérisée en ce qu'**entre l'élément de manoeuvre (20) et la trappe de fermeture (26), il est prévu un accouplement détachable (24, 28, 30) qui permet de défaire la liaison entre l'élément de manoeuvre et la trappe de fermeture lorsque le support de lamelles (16) est amené en position fermée.

4. Buse d'aération selon la revendication 3, **caractérisée en ce que** l'accouplement est constitué par un levier de réglage (28), qui est relié à la trappe de fermeture (26) et présente une fente (30) ouverte sur un côté, et par une tige (24) qui est placée sur l'élément de manoeuvre (20) et peut s'engager dans la fente.

5. Buse d'aération selon l'une quelconque des revendications précédentes, **caractérisée en ce qu'**il est prévu une butée qui peut maintenir la trappe de fermeture dans une position fermée.

6. Buse d'aération selon la revendication 5, **caractérisée en ce que** la butée est constituée par une menotte à ressort qui peut coopérer avec une saillie de la trappe de fermeture.

7. Buse d'aération selon l'une quelconque des revendications précédentes, **caractérisée en ce qu'**il est prévu un frein à friction pour l'élément de manoeuvre.

8. Buse d'aération selon l'une quelconque des revendications précédentes, **caractérisée en ce qu'** il est prévu au moins une lamelle (18) qui est installée de manière à pouvoir pivoter sur le support de lamelles (16) dans l'ouverture d'échappement.

9. Buse d'aération selon l'une quelconque des revendications précédentes, **caractérisée en ce que** la trappe de fermeture (26) est fermée lorsque le support de lamelles (16) se trouve en position fermée.

10. Buse d'aération selon l'une quelconque des revendications précédentes, **caractérisée en ce que** la trappe de fermeture (26) se trouve, une fois que le support de lamel les (16) a été amené de sa position ouverte vers sa position fermée et a été de nouveau ramené en position ouverte, dans la même position qu'avant la fermeture du support de lamelles.
